# EUROPÄISCHE PATENTSCHRIFT

(11) **EP 0 825 411 B1**
(45) Veröffentlichungstag und Bekanntmachung des Hinweises auf die Patenterteilung: **20.10.1999**
(21) Anmeldenummer: 97114052.0
(22) Anmeldetag: 14.08.1997
(51) Int. Cl.: F41H 7/02

(54) **Gefechtsfahrzeug mit dieselelektrischem Antrieb und Heckluke**
Armoured land vehicle with rear door and diesel electric propulsion
Véhicule blindé à propulsion diesel électrique, le véhicule comportant une porte de sortie arrière

(30) Priorität: 20.08.1996 DE 19633331
(43) Veröffentlichungstag der Anmeldung: 25.02.1998
(73) Patentinhaber: Wegmann & Co. GmbH, D-34127 Kassel (DE)
(72) Erfinder: Abels, Frank, 29633 Munster (DE)
(74) Vertreter: Feder, Wolf-Dietrich, Dr. Dipl.-Phys.

(56) Entgegenhaltungen:
- EP-A- 0 001 033
- DE-A- 3 239 141
- DE-A- 4 427 322
- DE-A- 19 537 945
- GB-A- 2 110 997
- GB-A- 2 135 946
- US-A- 2 475 496
- US-A- 4 325 451
- GERARD TURBE: "La version véhicule blindé de combat du Cobra" REVUE INTERNATIONALE DE DEFENSE, Bd. 21, Nr. 4, 1988, GENEVA-CH, Seiten 391-392, XP002066478
- OGORKIEWICZ R M: "ACHZARIT A RADICALLY DIFFERENT ARMOURED INFANTRY VEHICLE" INTERNATIONAL DEFENSE REVIEW, Bd. 28, Nr. 9, 1.September 1995, Seite 73/74 XP000535347

## Beschreibung

Die Erfindung betrifft ein Gefechtsfahrzeug, insbesondere einen Schützenpanzer, das neben dem dieselelektrischen Antrieb im Heck auch noch über eine Heckluke für die Schützen verfügt, wie z.B. beschrieben in der nicht vorveröffentlichte DE 195 37 945 A. Ein Gefechtsfahrzeug mit dieselelektrischem Antrieb im Heck ist aus dem Artikel: "La version véhicule blindé de Combat du Cobra" Revue Internationale de Défense Bd. 21 (1988) n°4, Geneva-CH, seiten 391-392 bekannt. Ein Schützenpanzer mit Heckluke und dieselelektrischem Antrieb im Bug ist aus der EP 0 001 033 A bekannt.

Schützenpanzer haben im allgemeinen eine Heckluke, um das schnelle Auf- und Absitzen der Besatzung im geschützten Heckbereich zu ermöglichen. Deshalb ist der Antrieb der bekannten Schützenpanzer im allgemeinen vorne angeordnet, um den Heckbereich für Besatzungsraum und Luke freizuhaben.

Nun hat es sich in der Vergangenheit herausgestellt, daß aus verschiedenen Gründen ein Frontantrieb von Gefechtsfahrzeugen nicht günstig ist, woraus sich für ein neues Fahrzeug die Forderung herauskristallisierte, den Antrieb von Schützenpanzern, so wie den von Kampfpanzern, hinten anzuordnen. Da aber gleichzeitig aus wichtigen kampftaktischen Gründen der Heckausstieg über eine Luke auch bei zukünftigen Kampffahrzeugen unabdingbar und wichtige Forderung ist, entsteht bei Betrachtung herkömmlicher Antriebstechniken insoweit ein Widerspruch, daß schon auf den ersten Blick die Forderung nach Antrieb in Heck und Heckluke nicht gemeinsam realisierbar erscheint.

Die israelische Rüstungsindustrie hat versucht (Siehe "Achzarit, a radically different armoured infantry vehicle", International Defense Review Bd. 28 n°9 September 1995 Coulsdon GB, Seiten 73, 74), diesen Widerspruch aufzulösen, indem sie bei einem neuen Schützenpanzer einen Heckantrieb mit einem Spezialgetriebe anwendet, das so ausgebildet ist, daß zwischen dem Triebwerk und der Seitenwand des Fahrzeuggehäuses ein schmaler Gang entsteht, der im unteren Teil in Höhe von etwa 50 cm einen Getriebetunnel zum rechten Antriebsrad aufweist. Der Raum oberhalb des Getriebetunnels ist natürlich mit etwa 60 cm Höhe viel zu niedrig, um ein schnelles Auf- oder Absitzen der Besatzung zu ermöglichen. Um den Gang höher zu machen wendet man bei dem israelischen Fahrzeug den Kunstgriff an, das Dach oberhalb des Ganges im Heckbereich anzuheben, so daß eine dreieckige "Dachgaube" entsteht, durch die die Soldaten den Schützenpanzer verlassen können.

Nachteile dieses Prinzips
- enge Platzverhältnisse trotz der angehobenen Dachgaube
- Schützenpanzer vergrößert im kritischen Moment des Absitzens seine Silhouette, gerade in demjenigen Bereich, der besonders gefährdet ist
- Besatzung muß beim Auf- oder Absitzen den hohen Getriebetunnel überspringen.

Es werden seit längerem Überlegungen und Untersuchungen angestellt, den Antrieb von Gefechtsfahrzeugen auf dieselelektrischer Basis zu organisieren. Dabei wird von einer Verbrennungsmaschine, vorzugsweise einem Dieselmotor, der einen Generator antreibt und den erzeugten Strom über entsprechende Leitungen zu Antriebsmotoren an den Kettenantrieben leitet, ausgegangen. Eine solche dieselelektrische Antriebseinrichtung weist als Hauptvorteil die Möglichkeit auf, die bisher zusammengebauten Baugruppen, Motor, Getriebe und Endantriebe, die als ein Block im Fahrzeug zu integrieren waren und damit im allgemeinen die Konfiguration der Fahrzeuge bestimmten, nun unter Anwendung des dieselelektrischen Prinzips getrennt als Verbrennungsmaschine, Generator und Elektromotoren aufgelockert im Fahrzeug einzubauen, so daß eine bessere Raumausnutzung eines Fahrzeugs möglich ist. Bei bisherigen Vorschlägen dieselelektrischer Fahrzeuge wurde im allgemeinen von einer, höchstens zwei Verbrennungsmaschinen ausgegangen, die dann im Front- oder Heckbereich ( auch im Mittelbereich) des Fahrzeuges angeordnet wurden und aufgrund ihrer Gesamtgröße doch noch konzeptbestimmend waren. Bei der Konstruktion von Kampffahrzeugen stellt es sich immer wieder heraus, daß es viele Ecken und Nischen gibt, die als Volumen zur Verfügung stehen, aber nicht optimal genutzt werden können, weil ihre Ausformung, z.B. zur Integration eines großen Triebwerkes zu klein ist.

Demgegenüber liegt der Erfindung die Aufgabe zugrunde, für ein Gefechtsfahrzeug (Schützenpanzer) eine ergonomisch günstige und raumsparende Anordnung zu finden, die ein schnelles und bequemes Auf- und Absitzen aus dem Fahrzeug ermöglicht, obwohl der Antrieb des Fahrzeuges nicht im Frontbereich angeordnet ist.

Gelöst wird diese Aufgabe durch die im Patentanspruch 1 angegebenen Merkmale.

Vorteilhafte Ausgestaltungen und Weiterbildungen der Erfindung gehen aus den Merkmalen der Unteransprüche hervor.

Die Erfindung geht von dem Grundgedanken aus, die Verbrennungsmaschinen in kleinere Baueinheiten aufzuteilen und an günstigen Plätzen im Fahrzeug zu verteilen, um eine bessere Raumausnutzung in einem Kampffahrzeug zu erhalten.

Es wird erfindungsgemäß die Leistung von etwa 1300 kW zum Antrieb eines Kampffahrzeuges nicht durch einen einzigen Motor sondern durch mehrere z.B. 10 kleine Motoren von je 130 kW aufgebracht. Solche 130 kW Motoren sind als Automobilmotoren (Turbodiesel) von verschiedenen Herstellern auf dem Mark, z.B. das Modell OM 606 D 30 LA der Firma Daimler Benz. Die Abmessung dieser kleinen Motoren gestattet es, bisher nicht nutzbare Räume in Kampffahrzeugen zur Motorintegration zu nutzen und damit ganz neue Fahrzeugkonzepte möglich zu machen. Dem dieselelektrischen Antrieb wird bei dieser erfindungsgemäßen Technik Rechnung getragen, indem an jedem der kleinen Dieselmotoren ein elektrischer Generator angeflanscht ist und die Leistung dieser Generatoren zur Versorgung der E-Motoren an den Ketten zusammengefaßt wird. Neben der günstigen räumlichen Anordnung bei der Verwendung solcher Antriebe entsteht der Vorteil der Redundanzen innerhalb des Systems, weil bei Ausfall einzelner Motoren, sei es durch technische Mängel oder Beschuß, das Gesamtsystem, wenn auch mit niedrigerer Leistung, noch erhalten bleibt. Darüberhinaus zeichnet es sich ab, daß die Verwendung mehrerer kleiner Motoren im Gesamtgewicht günstiger als der Einsatz eines großen Motores ist und auch auf der Kostenseite die Verwendung von Standardtriebwerken hoher Stückzahlen aus dem Automobilbau Vorteile verspricht.

Im folgenden wird anhand der beigefügten Zeichnungen ein Ausführungsbeispiel für die Erfindung näher erläutert.
Fig. 1 zeigt in perspektivischer Darstellung ein Gefechtsfahrzeug nach der Erfindung mit aufgesetztem Motorblock;
Fig. 2 zeigt das Gefechtsfahrzeug nach Fig. 1 mit angehobenem Motorblock;
Fig. 3 zeigt das Gefechtsfahrzeug nach Fig. 1 mit abgesenkter Heckluke;
Fig. 4 zeigt das Gefechtsfahrzeug gemäß Fig. 3 beim Aussteigen eines Soldaten;
Fig. 5 zeigt in einer Schnittdarstellung das Gefechtsfahrzeug nach den Fig. 1 bis 4 in seiner Normalstellung bei angehobener Heckluke;
Fig. 6 zeigt in einer Darstellung analog Fig. 5 das Gefechtsfahrzeug mit abgesenkter Heckluke;
Fig. 7 zeigt das Gefechtsfahrzeug nach Fig. 5 bei abgesenkter Heckluke und angehobenem Fahrzeugheck.

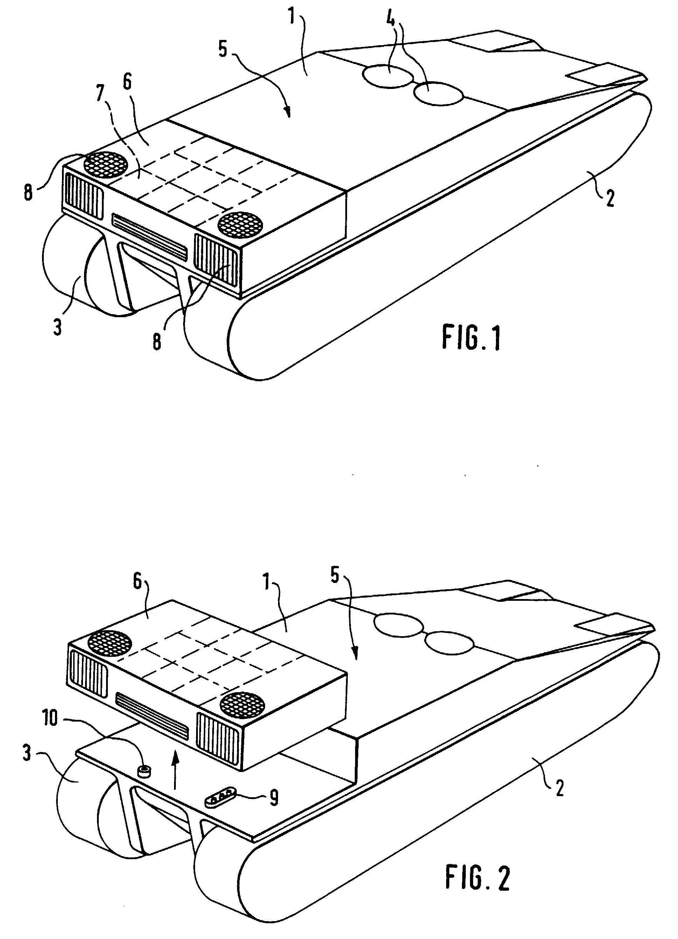

In Figur 1 ist das Gefechtsfahrzeug mit Kettenlaufwerk mit einer Zwei-Mann-Kernbesatzung dargestellt. Zur Verdeutlichung ist die für diese Erfindung nicht relevante Waffenanlage weggelassen. Es ist erkennbar: Gehäuse des Gefechtsfahrzeuges 1 mit rechtem Kettenstrang 2, linken Kettenstrang 3, Luken für Kernbesatzung 4, Besatzungsraum unter Dach 5, Motorblock 6 mit neun Antriebsmotoren 7 und zwei Lüftern mit Abgasanlagen 8.

In Figur 2 ist zusätzlich erkennbar: Triebwerksblock 6 in angehobener Position zu Service- und Instandsetzungszwecken mit Leistungs- und Steuerstecker 9 und Kraftstoffzuleitung 10.

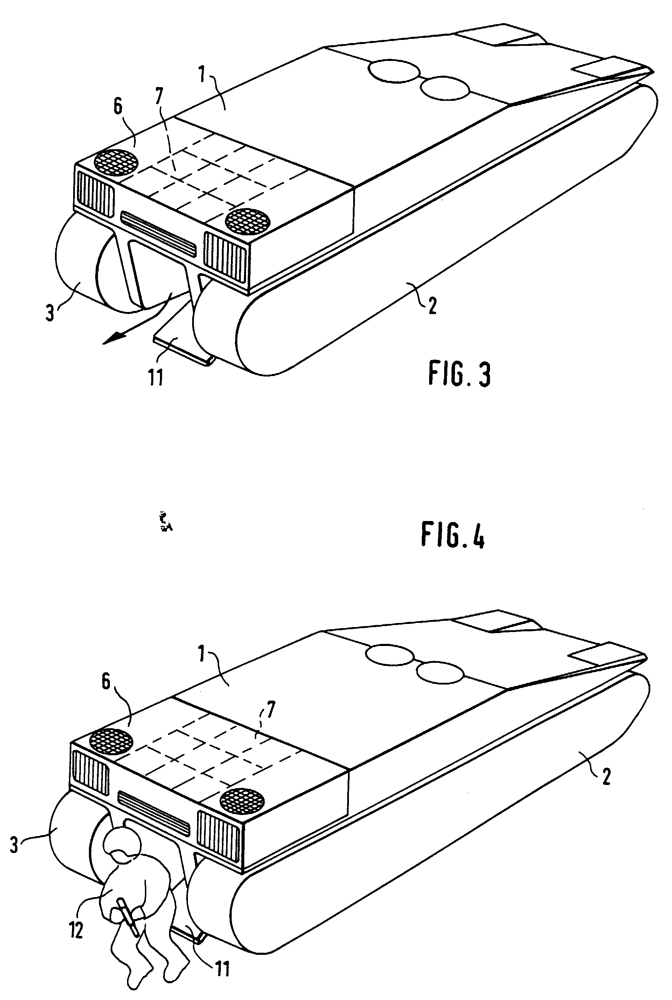

In Figur 3 ist erkennbar zusätzlich zu den vorgenannten Baugruppen die Heckluke 11, die in heruntergeklappter Form auf dem Boden aufliegt und durch die die Besatzung auf- oder absitzen kann.

In Figur 4 ist ein absitzender Soldat 12, der durch die Heckluke 11 absitzt, dargestellt.

Bei dem in den Figuren 1 bis 4 dargestellten Gefechtsfahrzeug weist also die Antriebsvorrichtung separate, die Ketten 2 antreibende, nicht dargestellte Elektromotoren auf sowie mehrere stromerzeugende dieselelektrische Aggregate 7, die jeweils aus einem von einem PKW-Dieselmotor angetriebenen Generator bestehen, wobei die dieselelektrischen Aggregate oberhalb der Kettenabdeckung symmetrisch zur Längsmittelachse des Fahrzeugs derart angeordnet sind, daß unterhalb der dieselelektrischen Aggregate ein Durchgangsraum zwischen dem Fahrzeuginnenraum und der Heckluke 11 frei bleibt, der durch eine Bewegung mindestens eines Teils seines Bodens im Ausführungsbeispiel der herunterklappbaren Heckluke 11 erweiterbar ist.

Die dieselelektrischen Aggregate sind in einem gemeinsamen, im Heckbereich des Fahrzeugs angeordneten, sich im wesentlichen über die ganze Fahrzeugbreite erstreckenden Gehäuse 6 angeordnet, das lösbar mit dem Fahrzeug verbunden ist.

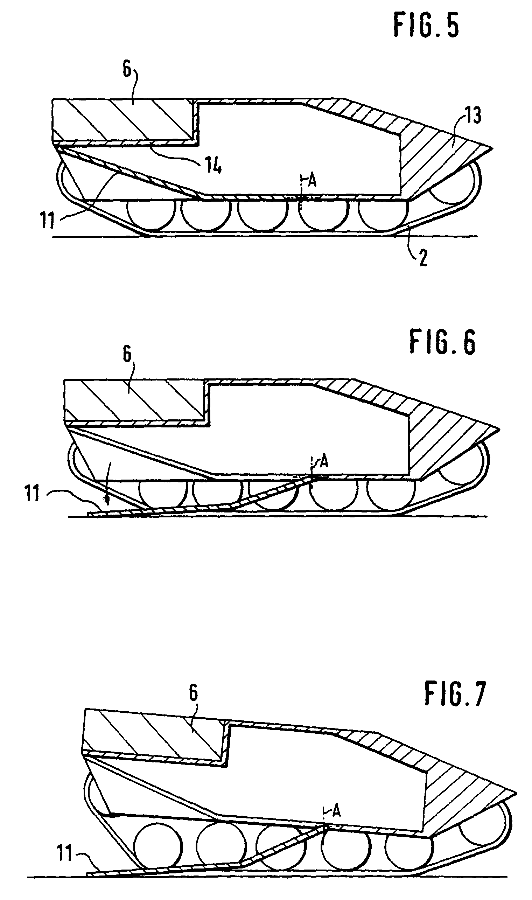

In Figur 5 ist das Fahrzeug in der Prinzipdarstellung im Schnitt dargestellt, wobei erkennbar ist, die Antriebsbaugruppe 6, der vordere Panzerschutz 13, der linke Kettenstrang 2 und die um den Drehpunkt A herunterklappbare Luke 11 sowie die dem Fahrzeug Steifigkeit verleihende Verbindungsplatte 14 oberhalb der Luke.

In Figur 6 ist die auf dem Boden abgesenkte Luke 11 erkennbar, so daß ein guter Durchstieg für die Besatzung nach hinten entsteht.

Gemäß einer Variante dieses Ausführungsbeispiels ist in Figur 7 dargestellt, wie ein sogenanntes Hydroplaufwerk die Bodenfreiheit des Fahrzeugs zum Zweck des bequemeren Absitzens durch Anheben des Fahrzeugs vergrößert.

Die Vorteile der erfindungsgemäßen Ausführung sind:
- große Heckluke trotz Antrieb im Heckbereich möglich;
- redundante Antriebsstränge - bei Ausfall einer Seite durch Beschuß oder technischem Versagen bleibt Mobilität durch den zweiten Antriebsstrang erhalten;
- Ausfall einzelner Motoren innerhalb der Antriebs stränge führt nur zu einer Leistungsminderung aber nicht zu einem Gesamtausfall;
- Antriebsteile können untereinander ausgetauscht werden (modulares Prinzip);
- großer Besatzungsraum möglich, weil Hauptantriebsanlage mit mechanischem Getriebe, das sonst den Raum zwischen den Fahrzeugwänden ausfüllt, entfällt;
- günstige Kosten durch Verwendung von Standardtriebwerken aus der PKW Produktion.

## Patentansprüche

1. Gefechtsfahrzeug mit Heckluke und einem Kettenfahrwerk, das von einer im hinteren Teil des Fahrzeugs angeordneten dieselelektrischen Antriebsvorrichtung antreibbar ist, wobei die Antriebsvorrichtung separate, die Ketten (2) antreibende Elektromotoren aufweist sowie mehrere stromerzeugende dieselelektrische Aggregate (7), die jeweils aus einem von einem PKW-Dieselmotor angetriebenen Generator bestehen, wobei die dieselelektrischen Aggregate oberhalb der Kettenabdeckung symmetrisch zur Längsmittelachse des Fahrzeugs derart angeordnet sind, daß unterhalb der dieselelektrischen Aggregate ein Durchgangsraum zwischen dem Fahrzeuginnenraum und der Heckluke (11) frei bleibt, der durch eine Bewegung mindestens eines Teils seines Bodens erweiterbar ist.

2. Gefechtsfahrzeug nach Anspruch 1, dadurch gekennzeichnet, daß als Dieselmotoren PKW-Turbodieselmotoren dienen.

3. Gefechtsfahrzeug nach Anspruch 1 oder 2, dadurch gekennzeichnet, daß die dieselelektrischen Aggregate des Fahrzeugs in einem gemeinsamen, im Heckbereich des Fahrzeugs angeordneten, sich im wesentlichen über die ganze Fahrzeugbreite erstrekkenden Gehäuse (6) angeordnet sind, das lösbar mit dem Fahrzeug verbunden ist.

4. Gefechtsfahrzeug nach einem der Ansprüche 1 bis 3, dadurch gekennzeichnet, daß ein Teil des Fahrzeugbodens in einem vom Innenraum bis zur Heckluke laufenden sich über einen Teil der Fahrzeugbreite erstreckenden Abschnitt um eine Horizontale in Fahrzeugquerrichtung verlaufende, im vorderen Fahrzeugbereich angeordnete Schwenkachse (A) nach unten schwenkbar ist (Fig. 6).

5. Gefechtsfahrzeug nach Anspruch 4, dadurch gekennzeichnet, daß mindestens der nach unten abschwenkbare Abschnitt (Fig. 5 und 6, Ziffer 11) des Fahrzeugbodens aus zwei in Fahrzeuglängsrichtung aneinander anschließenden Teilabschnitten besteht, die an ihrer Innenseite einen vorgegebenen stumpfen Winkel miteinander einschließen.

6. Gefechtsfahrzeug nach Anspruch 4 oder 5, dadurch gekennzeichnet, daß das Fahrzeug ein Hydroplaufwerk zur Vergrößerung der Bodenfreiheit im Heckbereich aufweist (Fig. 7).

## Claims

1. Fighting vehicle with rear hatch and a chain running gear which is capable of being driven by a diesel-electric drive device arranged in the rear part of the vehicle, wherein the drive device comprises separate electric motors driving the chains (2) and also several current-generating diesel-electric units (7) which each consist of a generator driven by an automobile diesel engine, whereby the diesel-electric units are arranged above the chain covering symmetrically with respect to the longitudinal centre axis of the vehicle in such a way that a passageway space which is capable of being enlarged as a result of a movement of at least a part of its floor remains free below the diesel-electric units between the interior of the vehicle and the rear hatch (11).

2. Fighting vehicle according to Claim 1, characterised in that automobile turbodiesel engines serve as diesel engines.

3. Fighting vehicle according to Claim 1 or 2, characterised in that the diesel-electric units of the vehicle are arranged in a common housing (6) which is arranged in the rear region of the vehicle, extends substantially over the entire width of the vehicle and is detachably connected to the vehicle.

4. Fighting vehicle according to one of Claims 1 to 3, characterised in that a part of the floor of the vehicle is capable of being pivoted downwards in a section running from the interior as far as the rear hatch and extending over a part of the width of the vehicle about a pivotal axis (A) extending horizontally in the transverse direction of the vehicle and arranged in the front region of the vehicle (Fig. 6).

5. Fighting vehicle according to Claim 4, characterised in that at least the section (Figs. 5 and 6, numeral 11) of the floor of the vehicle that is capable of being pivoted downwards consists of two subsections which adjoin one another in the longitudinal direction of the vehicle and which together include a predetermined obtuse angle on their inside.

6. Fighting vehicle according to Claim 4 or 5, characterised in that the vehicle comprises a hydropneumatic running gear for the purpose of enlarging the ground clearance in the rear region (Fig. 7).

## Revendications

1. Véhicule de combat comprenant une écoutille arrière et un train roulant à chenilles qui peut être entraîné par un dispositif de propulsion diesel-électrique agencé dans la partie arrière du véhicule, dans lequel le dispositif propulseur comprend des moteurs électriques séparés qui entraînent les chenilles (2), ainsi que plusieurs groupes diesel-électriques (7) produisant du courant qui sont composés chacun d'une génératrice entraînée par un moteur diesel d'automobile, et les groupes diesel-électriques sont disposés au-dessus du carter de protection des chenilles, symétriquement par rapport à l'axe longitudinal médian du véhicule, de telle sorte qu'au-dessous des groupes diesel-électriques, il reste libre un espace de passage entre le volume intérieur du véhicule et l'écoutille arrière (11), qui peut être élargi par un déplacement d'au moins une partie de son plancher.

2. Véhicule de combat selon la revendication 1, caractérisé en ce qu'on utilise comme moteurs diesel des moteurs turbo-diesel d'automobiles.

3. Véhicule de combat selon la revendication 1 ou 2, caractérisé en ce que les groupes diesel-électriques du véhicule sont montés dans un carter commun (6) agencé dans la région arrière du véhicule, et qui s'étend sensiblement sur toute la largeur du véhicule, et qui est assemblé au véhicule de façon démontable.

4. Véhicule de combat selon une des revendications 1 à 3, caractérisé en ce que, dans un segment allant du volume intérieur jusqu'à l'écoutille arrière, et qui s'étend sur une partie de la largeur du véhicule, une partie du plancher du véhicule peut être rabattue vers le bas autour d'un axe de pivotement horizontal (A), qui s'étend dans la direction transversale du véhicule et qui est disposé dans la région avant du véhicule (figure 6).

5. Véhicule de combat selon la revendication 4, caractérisé en ce qu'au moins le segment du plancher du véhicule (figures 5 et 6, référence 11) qui peut être rabattu vers le bas est composé de deux segments partiels qui se font mutuellement suite dans la direction longitudinale du véhicule et qui forment ensemble, sur le côté intérieur, un angle obtus prédéterminé.

6. Véhicule de combat selon la revendication 4 ou 5, caractérisé en ce que le véhicule présente un mécanisme hydropneumatique pour agrandir la garde au sol dans la région arrière (figure 7).
